# EUROPEAN PATENT SPECIFICATION

(11) **EP 0 573 383 B1**
(45) Date of publication and mention of the grant of the patent: **13.03.1996**
(21) Application number: 93610029.6
(22) Date of filing: 11.05.1993
(51) Int. Cl.: F16J 15/08

(54) **A sealing member**
Abdichtungselement
Elément d'étanchéité

(30) Priority: 03.06.1992 DK 737/92
(43) Date of publication of application: 08.12.1993
(73) Proprietor: MAN B&W DIESEL A/S, DK-2450 Copenhagen SV (DK)
(72) Inventor: Meier, Jorgen, DK-4000 Roskilde (DK)
(74) Representative: Indahl, Peter Jensen

(56) References cited:
- EP-A- 0 094 616
- DE-A- 3 441 503
- US-A- 2 289 620
- US-A- 4 103 913

## Description

According to one aspect, the invention relates to a sealing member for sealing between two elements fixed to each other and made from a ferrous material and each of which has a substantially plane abutting surface, the abutting surfaces being arranged opposite each other on either side of the sealing member that is made from a metallic material, preferably soft steel. According to another aspect, the invention relates to an element to be firmly fixed to another element, the elements having each a substantially plane abutting surface opposite each other on either side of a sealing member.

DE-OS-38 04 436 deals with a sealing member to be disposed between an engine block and the associated cylinder head. The sealing member consists of soft material which on the side facing the combustion chamber is rimmed by a metallic ring having a U-shaped cross-section. The soft material is impregnated with an elastomer based on silicone which ensures a micro and macro sealing during the first revolutions of the new engine. The rim is structured with small depressions binding the soft silicone elastomer in fairly uniformly distributed droplets. The elastomer offers a small increase of the friction of the sealing member against the cylinder head and the engine block so that the sealing member is better controlled than if merely the clean sealing surfaces were in abutment on each other.

Sealings are widely used for assembling machine components, engine components or pipe sections where the sealing member is disposed between the sealing surfaces or the abutting surfaces of the components to be clamped together. It is very important in many fields of application that the sealing completely fulfils the intended function, even after a long time without any inspection as it is normally supposed that the sealing member only needs to be overhauled and for instance to be exchanged if the fixed elements are separated and reassembled, e.g. by inspection of the condition of the elements.

External influence may cause the fixed elements to move slightly in relation to each other, in particular if the two elements are differently shaped, have different dimensions or if the elements are made from different materials. This is due to the fact that the varying properties of the elements result in that the elements do not react uniformly to external influence. This circumstance is particularly pronounced if the elements are subjected to varying thermal loads that may give rise to very large forces between the abutting surfaces, if it is attempted to impede the thermally caused dimensional changes of the elements. In practice, the abutting surfaces of the elements are therefore allowed to slide faintly in relation to each other in the plane of the surfaces.

The invention is based on the observation that a sealing ring clamped between a cylinder cover and a cylinder wall element in a large two-stroke internal combustion engine some times after long-time operation creeps out of the joined surfaces either in the radially outwards direction or into the combustion chamber. Such a movement of the sealing member is extremely undesired, necessitating premature dismantling of the elements just to replace the sealing member. In cases where the sealing is disposed in a place that is not or cannot be supervised, serious leakages may further occur with the risk of failure of the involved machine components or discharge of contaminants to the environment.

The object of the invention is to eliminate the above mentioned drawbacks through designing of a sealing whose sealing member has no tendency to creep out of the joint between the elements.

This is obtained by a sealing member which according to the invention is characterized in that the sealing member on one of its sides is provided with a friction increasing coating comprising particles substantially harder than the ferrous material of the elements in order to provide a difference in friction between the sealing member and one and the other abutting surface, respectively. Alternatively the coating may be applied to the abutting surface of one of the elements.

The difference in friction between the sealing member and one and the other abutting surface, respectively, causes the sealing member to be firmly locked to the abutting surface where the friction is largest because the sealing member slides at first in relation to the other sealing surface where the friction is considerably smaller. Thus, the sealing member only follows the movements of one element whereas minor displacements might occur between the sealing member and the abutting surface of the other element. When the external stresses on the elements result in reciprocating movements of the abutting surface on one element in relation to the abutting surface of the other element, the firm locking of the sealing member to one element prevents the sealing member from being subjected to a permanent deformation caused by a sticking of the sealing member to the one element during the forwards displacement and subsequently sticking to the other element during the backwards displacement.

The frictional difference is provided in that a friction increasing coating is applied to the side of the sealing member facing one of the abutting surfaces. From a manufacturing point of view it is simplest to apply the coating to the sealing member which is more handy than the substantially larger elements. A friction increasing coating most frequently permits a larger frictional difference than a friction reducing coating, as the frictional coefficient between an ordinary sealing member and the associated element is normally about 0.2.

The coating includes particles substantially harder than the ferrous material of the elements. The clamping force acting across the sealing makes the hard particles of the coating engage the surface of the associated abutting surface as a kind of micro-toothing, thereby ensuring an effective locking of the sealing member to the associated abutting surface. Since the particles are substantially harder than both the material of the elements and the sealing member basic material they do not become flattened or rounded not even after use for a longer period of time.

It is preferred that the coating contains at least 20% by weight of carbides, boron nitrides or aluminium oxides embedded in a metallic matrix, because this offers a suitable friction increase by abutment on an abutting surface of a ferrous material, such as steel or cast iron. If the contents of the hard carbides, boron nitrides or oxides of the coating are substantally lower than 20% by weight there is after use for a long time a risk of a gradual loss of the friction increasing effect, because some of the hard particles sink into the basic material of the sealing member.

The properties of the coating become particularly advantageous if the coating be applied by means of plasma spraying. By a suitable composition of the filling material the matrix material of the coating may be applied in a molten state whereas the hard particles do not melt in the plasma arc. This makes it possible to deposit a very thin matrix layer containing comparatively large, hard particles, thereby making the coating very rough.

The sealing member according to the invention is particularly applicable as a sealing ring to be arranged between the downwards facing abutting surface of a cylinder cover and the upwards facing abutting surface of a subjacent cylinder wall element in a large two-stroke internal combustion engine. Every time the engine is heated on starting and cooled after being stopped a slight radially directed sliding of the cylinder cover occurs in relation to the cylinder wall element. Particularly as regards large two-stroke internal combustion engines in which the piston may have a diameter amounting to 90 cm, the sealing ring is exposed to a heavy pressure loading owing to the clamping of the cover against the cylinder wall element. The large axial loading pulsating during running of the engine entails that permanent deformations are very easily applied to the sealing ring when the relative movement between the cover and the wall element deforms the sealing ring in the radial direction.

The invention will now be explained in detail with reference to the very schematical drawings, in which
Fig. 1 is a cross-section through the sealing between a cylinder cover and a cylinder liner with a sealing ring disposed between said two elements,
Fig. 2 is a plan view of the sealing ring shown in Fig. 1, and
Fig. 3 is a graph of frictional conditions as measured for a conventional sealing member and a sealing member according to the invention, respectively.

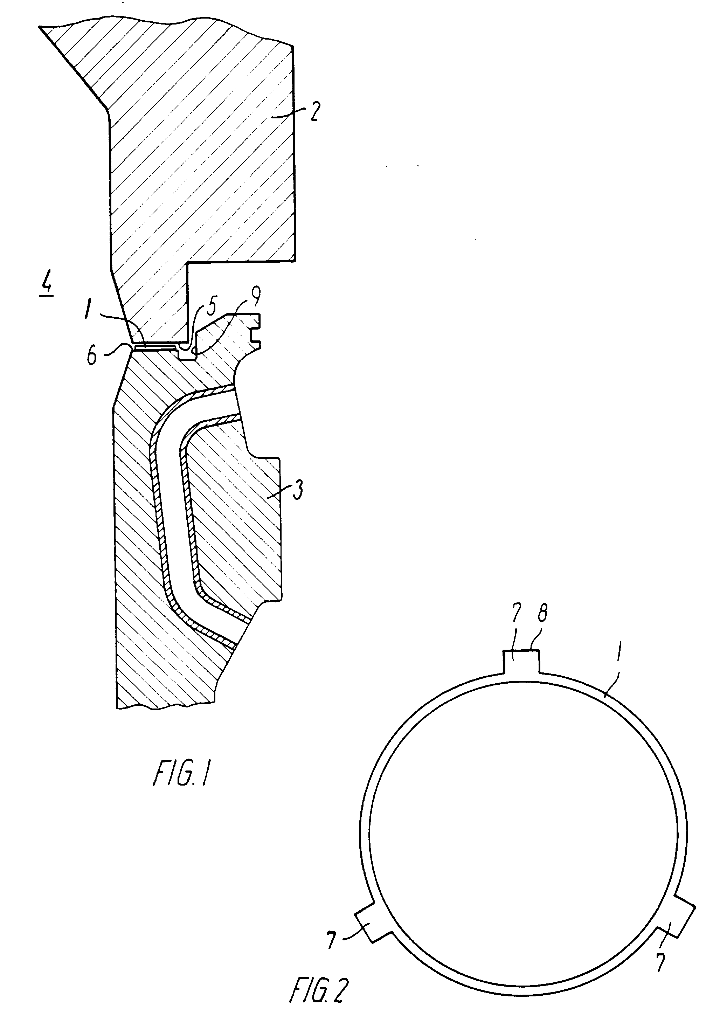

Fig. 1 from which details of no importance for the invention have been omitted, shows a sealing member in the form of a sealing ring 1 which seals the transition between two elements clamped against each other, viz. a cylinder cover 2 and a cylinder liner 3 in a large two-stroke diesel engine. The cylinder cover 2 and the cylinder liner 3 define together with the piston, not shown, a combustion chamber 4. The upper side of the sealing member abuts on an annular, downwards facing abutting surface 5 at the bottom side of the cylinder cover 2 and the bottom side of the ring abuts on an annular, upwards facing abutting surface 6 of an elevated portion in the upper end area of the liner.

The cylinder cover 2 is in a conventional manner by means of stay bolts, not shown, clamped against the liner 3 with a force larger than the maximum value of the pulsating upwards directed force acting on the cylinder cover 2 during one engine cycle. Since the clamping force is transferred from the cover 2 to the liner 3 through the sealing ring 1, this ring is stressed by very large forces in the axial direction of the cylinder.

The sealing ring 1 is comparatively thin and has three projecting lobes 7, the outer edge 8 of which abuts on a vertical surface 9 on the liner 3 in order to ensure the correct positioning of the sealing ring when the cover 2 is mounted on the liner.

The sealing ring 1 is at the upper side or the bottom side provided with a friction increasing coating which firmly locks the sealing ring either to the cover 2 or to the liner 3. It is of course also possible to apply the coating to one of the abutting surfaces 5 or 6, but it is preferred to apply the coating to the sealing ring, which is considerably easier to handle than the much larger and heavier elements 2 or 3.

Very promising test results have been obtained by a plasma-sprayed coating of a ceramic-metallic material in which ceramic particles having a size from 30 to 40 µm are embedded in a comparatively soft metallic matrix (matrix hardness from 200 to 500 HV). Chromium carbides, boron nitrides and wolfram- or aluminium oxides may be mentioned as appropriate ceramic particulate materials, all of which present a hardness of more than 1000 HV. However, chromium carbides and boron nitrides are preferred due to their inherent resistance to chemically aggressive combustion products.

An example will now be explained in which friction experiments have been carried out with a block coated with a ceramic-metallic coating. In order to provide a basis of comparison a corresponding experiment has also been carried our with uncoated blocks.

A block of steel was coated by means of plasma spraying with a friction increasing coating of a ceramic-metallic material marketed by the Swedish corporation Daros Piston Rings AB under the trade name PM20 and which may be purchased as powder for use in plasma spraying, the powder having a grain size of approximately 140 mesh ± 30 µm and the carbide particles have a melting point of approximately 1890°C.

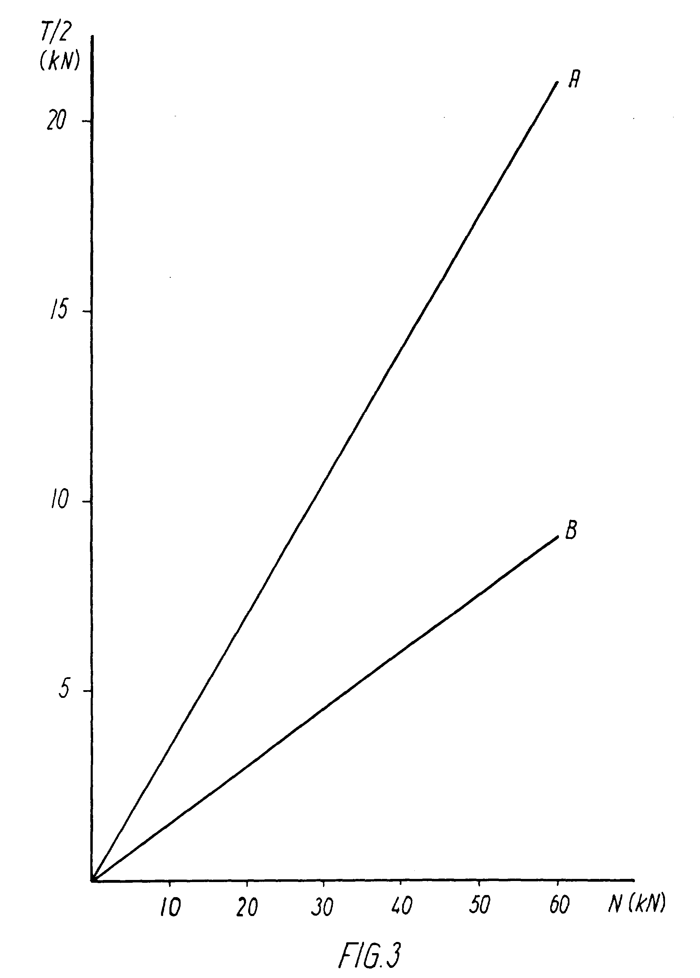

By means of a plasma spraying apparatus two superposed layers of a layer thickness of 5/100 mm, were applied to the block, whereby the resulting coating attained a thickness in the range from 60 to 140 µm. The coating was applied to two opposite sides of the block which was subsequently disposed centrally between two lateral blocks of steel. The two lateral blocks were pressed against the central block by a force N and a continually increasing force T was applied to the central block in a direction parallel to the abutting surfaces on the central and the lateral blocks. The size of the force T was registered immediately before the central block started moving in relation to the lateral blocks. The experiment was repeated for different values of the clamping force N. The result of the experiments is shown in Fig. 3 showing along the abscissa axis the force N and along the ordinate axis the force T/2, because the force T is being distributed equally between both abutting surfaces facing the two lateral blocks.

Fig. 3 shows the average values of the measured data represented in solid lines, the inclination of which states the frictional coefficient µ between the abutting surfaces. The curve A reflects the average values of the force T/2 immediately before the block is made to move and thus represents the static frictional coefficient µₛ.

The result of the experiment shows that the coating by abutment against a steel surface shows a frictional coefficient of µₛ = 0.35.

For the sake of comparison corresponding experiments were carried out, in which the central block was not provided with coating. The measuring results from this experiment is shown in the lower part of the chart in Fig. 3, in which the curve B represents the average values of the static frictional coefficient µₛ, which was measured to µₛ = 0.15.

It appears immediately from the above that the friction increasing coating increases the frictional coefficient by a factor of approximately 2.3.

Corresponding experiments were carried out with blocks of nickel. The total experiment results are given in the following Table 1

| Static coefficient | TABLE 1 Central block | | |
|---|---|---|---|
| Lateral blocks | Ground steel | Nickel | PM20 |
| Ground Steel | 0.15 | 0.25 | 0.34 |
| Nickel | | 0.29 | |
| PM20 | 0.35 | | 0.25 |

It appears immediately from the Table that the ceramic-metallic coating offers a very high frictional coefficient on sliding against steel. A coating of this type is therefore particularly fit for use according to the invention as a friction increasing coating on one side of a sealing member.

It appears, moreover, that two juxtaposed surfaces of nickel provide a frictional coefficient of approximately µₛ = 0.29, which is about twice times as high as compared to two steel surfaces in mutual abutment. It is therefore also possible according to the invention to provide one side of the sealing member and the associated abutting surface with a coating of nickel whereas the two remaining abutting surfaces are not provided with coating.

The sealing member may consist of other materials than soft steel, e.g. copper, provided on one side with a friction increasing coating.

## Claims

1. A sealing member (1) for sealing between two elements (2, 3) fixed to each other and made from a ferrous material and each of which has a substantially plane abutting surface (5, 6), the abutting surfaces being arranged opposite each other on either side of the sealing member (1) that is made from a metallic material, preferably soft steel, characterized in that the sealing member (1) on one of its sides is provided with a friction increasing coating comprising particles substantially harder than the ferrous material of the elements (2, 3) in order to provide a difference in friction between the sealing member (1) and one and the other abutting surface (5, 6), respectively.

2. A sealing member according to claim 1, characterized in that the coating contains at least 20% by weight of carbides, boron nitrides or aluminium oxides embedded in a metallic matrix.

3. A sealing member according to claims 1 or 2, characterized in that the coating is applied to one side of the sealing member (1) by means of plasma spraying.

4. A sealing member according to any one of the preceding claims, characterized in that the sealing member is a sealing ring (1) to be arranged between the downwards facing abutting surface of a cylinder cover (2) and the upwards facing abutting surface of a subjacent cylinder wall element (3) in a large two-stroke internal combustion engine.

5. An element to be firmly fixed to another element, the elements (2, 3) having each a substantially plane abutting surface (5, 6) opposite each other on either side of a sealing member (1), characterized in that one of the abutting surfaces (5, 6) is provided with a friction increasing coating comprising particles substantially harder than the material of said sealing member (1) in order to provide a difference in friction between the sealing member (1) and one an the other abutting surface (5, 6) respectively.

6. An element according to claim 5, characterized in that the coating contains at least 20% by weight of carbides, boron nitrides or aluminium oxides embedded in a metallic matrix.

7. An element according to claim 5 or 6, characterized in that the coating is applied to said abutting surface (5, 6) by means of plasma spraying.

## Patentansprüche

1. Abdichtungselement (1) zur Abdichtung zwischen zwei Elementen (2,3), die miteinander fest verbunden und aus einem Eisenwerkstoff hergestellt sind und von denen jedes eine im wesentlichen ebene Stoßfläche (5,6) besitzt, wobei die Stoßflächen einander gegenüberliegend auf beiden Seiten des Abdichtungselementes (1) angeordnet sind, das aus einem metallischen Werkstoff, vorzugsweise Flußstahl, hergestellt ist, dadurch gekennzeichnet, daß das Abdichtungselement (1) auf einer seiner Seiten mit einem reibungserhöhenden Überzug versehen ist, der Partikel umfaßt, die wesentlich härter sind als der Eisenwerkstoff der Elemente (2,3), um einen Unterschied in der Reibung zwischen dem Abdichtungselement (1) und der einen bzw. der anderen Stoßfläche (5,6) herbeizuführen.

2. Abdichtungselement nach Anspruch 1, dadurch gekennzeichnet, daß der Überzug zumindest 20 Gew.-% Carbide, Bornitride oder Aluminiumoxide, eingebettet in eine Metallmatrix, enthält.

3. Abdichtungselement nach Anspruch 1 oder 2, dadurch gekennzeichnet, daß der Überzug auf eine Seite des Abdichtungselements (1) mittels Plasmaspritzen aufgetragen ist.

4. Abdichtungselement nach einem der vorhergehenden Ansprüche, dadurch gekennzeichnet, daß das Abdichtungselement ein zwischen der nach unten weisenden Stoßfläche eines Zylinderdeckels (2) und der nach oben weisenden Stoßfläche eines darunterliegenden Zylinderwandelementes (3) in einem großen Zweitaktverbrennungsmotor anzuordnender Dichtungsring (1) ist.

5. Fest an einem anderen Element anzubringendes Element, wobei die Elemente (2,3) jeweils eine im wesentlichen ebene Stoßfläche (5,6) einander gegenüberliegend auf beiden Seiten eines Abdichtungselements (1) besitzen, dadurch gekennzeichnet, daß eine der Stoßflächen (5,6) mit einem reibungserhöhenden Überzug versehen ist, der Partikel umfaßt, die wesentlich härter sind als das Material des Abdichtungselements (1), um einen Unterschied in der Reibung zwischen dem Abdichtungselement (1) und der einen bzw. der anderen Stoßfläche (5,6) herbeizuführen.

6. Element nach Anspruch 5, dadurch gekennzeichnet, daß der Überzug zumindest 20 Gew.-% Carbide, Bornitride oder Aluminiumoxide, eingebettet in eine Metallmatrix, enthält.

7. Element nach Anspruch 5 oder 6, dadurch gekennzeichnet, daß der Überzug auf die Stoßfläche (5,6) mittels Plasmaspritzen aufgetragen ist.

## Revendications

1. Elément d'étanchéité (1) entre deux pièces (2, 3) fixées l'une à l'autre et constituées d'un matériau ferreux et présentant chacune une face de portée (5, 6) essentiellement plane, les faces de portée étant disposées face l'une à l'autre de part et d'autre de l'élément d'étanchéité (1) composé d'un materiau métallique, de préférence de l'acier doux, caractérisé en ce que l'élément d'étanchéité est pourvu, sur un de ses cotés, d'un revêtement d'accroissement de friction, comportant des particules substantiellement plus dures que le matériau ferreux des pièces (2, 3), pour donner une différence de friction entre l'élément d'étanchéité et l'une et l'autre des faces de portée (5, 6), respectivement.

2. Elément d'étanchéité selon la revendication 1, caractérisé en ce que le revêtement contient au moins 20 % en poids de carbures, nitrures de bore ou oxydes d'aluminium enrobés dans une matrice métallique.

3. Elément d'étanchéité selon les revendications 1 ou 2, caractérisé en ce que le revêtement est appliqué sur un coté de l'élément d'étanchéité (1) par pulvérisation au plasma.

4. Elément d'étanchéité selon l'une quelconque des revendications précédentes, caractérisé en ce que l'élément d'étanchéité est un anneau d'étanchéité (1) à placer entre la face de portée, orientée vers le bas, d'une culasse (2) de cylindre et la face de portée, orientée vers le haut, d'une pièce sous-jacente (3) de paroi de cylindre d'un moteur à combustion interne, deux-temps, de grande taille.

5. Elément à fixer fermement sur un autre élément, les éléments (2, 3) ayant chacun une face de portée (5, 6) essentiellement plane disposées face l'une à l'autre de part et d'autre d'un élément d'étanchéité (1), caractérisé en ce que l'une des faces de portée (5, 6) est pourvue d'un revêtement d'accroissement de friction, comportant des particules substantiellement plus dures que le matériau dudit élément d'étanchéité (1) afin d'assurer une différence de friction entre l'élément d'étanchéité (1) et l'une et l'autre des faces de portées (5, 6), respectivement.

6. Elément selon la revendication 5, caractérisé en ce que le revêtement contient au moins 20 % en poids de carbures, nitrures de bore ou oxydes d'aluminium enrobés dans une matrice métallique.

7. Elément selon les revendications 5 ou 6, caractérisé en ce le revêtement est appliqué auxdites faces de portée (5, 6) par pulvérisation au plasma.
